# EUROPEAN PATENT APPLICATION

(11) **EP 4 617 126 A1**
(43) Date of publication of application: **17.09.2025**
(21) Application number: 23888410.0
(22) Date of filing: 10.10.2023
(51) Int. Cl.: B60R 22/28, B60R 22/46

(54) **SEATBELT RETRACTOR**

(30) Priority: 08.11.2022 JP 2022178684
(71) Applicant: Autoliv Development AB, 44783 Vargarda (SE)
(72) Inventor: ONO, Katsuyasu, Yokohama-shi, Kanagawa 222-8580 (JP); KAWASAKI, Shuji, Yokohama-shi, Kanagawa 222-8580 (JP)
(74) Representative: Müller Verweyen
(86) International application number: PCT/JP2023/036792
(87) International publication number: WO 2024/101057

(57) **Abstract**

Provide a seatbelt retractor that can achieve switching of torsional torque from a torsion bar after activation of a pretensioner is stopped using a simple configuration. The seatbelt retractor 1 comprises a spindle 70, a pretensioner 20, a tread head 40, a torsion bar 50, and a lock ring 80. When the pretensioner 20 is activated, the rotation of the tread head 40 in the retracting direction is transmitted to the spindle 70 via the torsion bar 50, and the lock ring 80 rotates in the retracting direction together with the spindle 70. However, after the activation of the pretensioner 20 is stopped, rotation is prevented and the spindle 70 is allowed to rotate relative to the lock ring 80 in the belt payout direction due to the load of the occupant applied to the belt, and the relative rotation of the spindle 70 twists the torsion bar 50.

## Description

### TECHNICAL FIELD

The present disclosure relates to a seatbelt retractor for a vehicle.

### BACKGROUND ART

During a vehicle collision, the injuries sustained by occupants become more severe as the collision progresses. In order to reduce such injuries to occupants, the spindle assembly of a seatbelt retractor is typically configured to instantly retract the seatbelt during a vehicle collision to effectively restrain the body of the occupant, and then to payout the seatbelt to reduce strain on the chest of the occupant. A seatbelt retractor employing a switching device for achieving switching between retracing and payout of the seatbelt by the spindle assembly is known (see Patent Document 1).

### RELATED ART DOCUMENTS

### PATENT DOCUMENTS

Patent Document 1: Japanese Unexamined Patent Application Publication 2008-174049

### SUMMARY OF THE INVENTION

### PROBLEM TO BE SOLVED BY THE INVENTION

Incidentally, a switching device such as that disclosed in Patent Document 1 utilizes the gas pressure generated by the ignition of a path-switching gas generator to displace a part of the structure of the spindle assembly, thereby enabling the spindle assembly to retract and payout the seatbelt. Such a switching device has a complex configuration. In addition, since the switching device must be arranged outside the spindle assembly, the use of the switching device increases the size of the seatbelt retractor. As a result, the manufacturing cost of the seatbelt retractor increases and the degree of freedom in installing the seatbelt retractor decreases.

An object of the present disclosure is to provide a seatbelt retractor that can achieve switching of the torsional torque applied by the torsion bar after activation of a pretensioner is stopped, using a simple configuration.

### MEANS FOR SOLVING THE PROBLEM

A seatbelt retractor according to a first aspect of the present disclosure includes:
a spindle with a belt wound thereon;
a pretensioner that activates to transmit a force for rotating the spindle in a retracting direction of the belt to the spindle via a transfer path;
a tread head that is provided in the transfer path and that receives the force from the pretensioner and rotates in the retracting direction;
a torsion bar provided in the transfer path, a first end thereof being secured to the tread head and a second end thereof being secured to the spindle; and
a lock ring provided between the tread head and the spindle,
wherein
when the pretensioner is activated, rotation of the tread head in the retracting direction is transmitted to the spindle via the torsion bar, so that the lock ring rotates together with the spindle in the retracting direction, while after activation of the pretensioner is stopped, the lock ring is prevented from rotating, permitting the spindle to rotate relative to the lock ring in the belt payout direction due to the load of an occupant applied to the belt, and
the torsion bar is twisted by the relative rotation of the spindle.

According to this aspect, when the lock ring, which rotates together with the spindle in the retracting direction when the pretensioner is activated, is prevented from rotating after activation of the pretensioner is stopped, the torsion bar, which rotates together with the tread head when the pretensioner is activated, is twisted by the relative rotation of the spindle with respect to the lock ring after activation of the pretensioner is stopped, and energy is absorbed. In this manner, by utilizing the lock ring provided between the spindle and the tread head, the torsional torque applied by the torsion bar can be easily adjusted.

### [EFFECT OF THE INVENTION]

According to the present disclosure, a seatbelt retractor that can achieve switching of the torsional torque by the torsion bar after activation of the pretensioner is stopped can be provided using a simple configuration.

### BRIEF DESCRIPTION OF THE DRAWINGS

FIG. 1 is an exploded perspective view depicting the configuration of a seatbelt retractor according to Embodiment 1.
FIG. 2 is a cross-sectional view depicting the configuration of the seatbelt retractor according to Embodiment 1.
FIG. 3 is an exploded perspective view depicting a state in which the spindle assembly of the seatbelt retractor according to Embodiment 1 is viewed from a first direction.
FIG. 4 is an exploded perspective view as viewed from a second direction, depicting the state of the spindle assembly of the seatbelt retractor according to Embodiment 1.
FIG. 5A is a diagram depicting a state of a pawl before activation of a pretensioner of a seatbelt retractor according to Embodiment 1.
FIG. 5B is a diagram depicting a state of a pawl when the pretensioner of the seatbelt retractor according to Embodiment 1 is activated.
FIG. 5C is a diagram depicting a state of the pawl after the operation of the pretensioner of the seatbelt retractor according to Embodiment 1 has stopped.
FIG. 6 is a diagram depicting sliding displacement of a sleeve of the seatbelt retractor according to Embodiment 1.
FIG. 7A is a diagram depicting a state before the spindle of the seatbelt retractor according to Embodiment 1 starts to rotate for payout.
FIG. 7B is a diagram depicting a twisted state of a first bar and a position of the sleeve when the spindle of the seatbelt retractor according to Embodiment 1 is rotated 90 degrees in the payout direction.
FIG. 7C is a diagram depicting a twisted state of the first bar and a position of the sleeve when the spindle of the seatbelt retractor according to Embodiment 1 is rotated 135 degrees in the payout direction.
FIG. 7D is a diagram depicting a twisted state of the first bar and a position of the sleeve when the spindle of the seatbelt retractor according to Embodiment 1 is rotated 200 degrees in the payout direction.
FIG. 7E is a diagram depicting the twisted state of the first bar and a second bar and the position of the sleeve when the spindle of the seatbelt retractor according to Embodiment 1 rotates 720 degrees in the payout direction.
FIG. 7F is a diagram depicting the twisted state of the first bar and the second bar and the position of the sleeve when the spindle of the seatbelt retractor according to Embodiment 1 rotates 1080 degrees in the payout direction.
FIG. 8 is an exploded perspective view depicting the configuration of a seatbelt retractor according to Embodiment 2.
FIG. 9 is a cross-sectional view depicting a configuration of the seatbelt retractor according to Embodiment 2.
FIG. 10 is a diagram depicting a mounting state of an energy absorbing member of a seatbelt retractor according to Embodiment 2.
FIG. 11A is a diagram depicting a state of a pawl before a pretensioner of a seatbelt retractor according to Embodiment 3 is activated.
FIG. 11B is a diagram depicting a state of the pawl when the pretensioner of a seatbelt retractor according to Embodiment 3 is activated.
FIG. 11C is a diagram depicting a state of the pawl after operation of the pretensioner of the seatbelt retractor according to Embodiment 3 has stopped.

### DESCRIPTION OF THE PREFERRED EMBODIMENTS

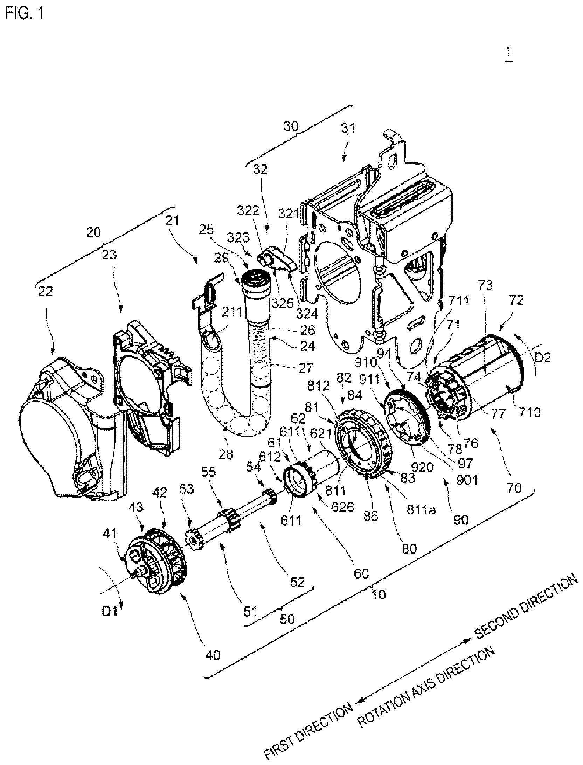

A seatbelt retractor according to a preferred embodiment of the present disclosure will be described with reference to the accompanying drawings. In this specification, the direction in which the seatbelt is retracted is defined as a "retracting direction D1", and the payout direction for the seatbelt is defined as the "payout direction D2". In addition, the state when the vehicles are about to collide and the state when the vehicles collide are collectively defined as "in the event of a vehicle collision", and the state of the vehicles other than "in the event of a vehicle collision" is defined as "normal state". In addition, the thrust direction in which a sleeve 60 described below displaces along the rotation axis of a spindle 70 is defined as the "rotation axis direction" (see FIG. 1), the direction in which the sleeve 60 separates from the spindle 70 is defined as the "separation direction" or "first direction", and the direction in which the sleeve 60 moves closer to the spindle 70 is defined as the "second direction".

### Embodiment 1

### <Seatbelt Retractor 1>

First, the configuration of a seatbelt retractor 1 according to Embodiment 1 will be described with reference to FIG. 1 to FIG. 5C.

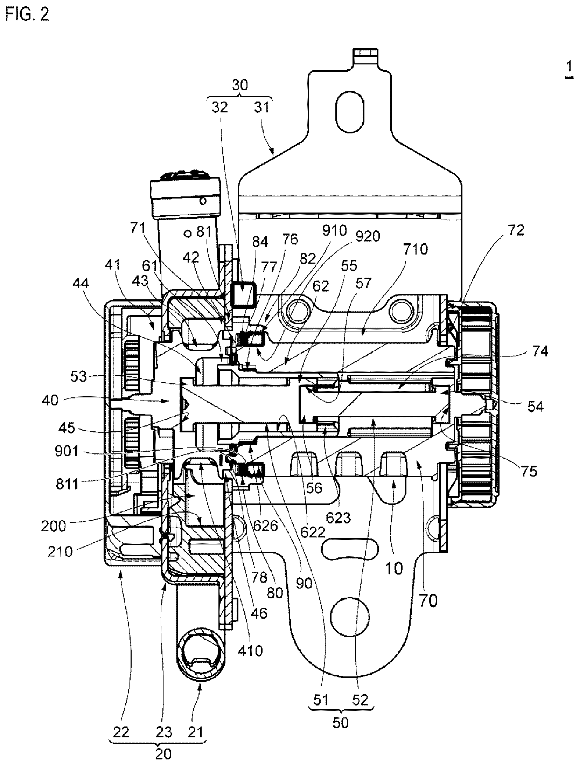

As depicted in FIG. 1 and FIG. 2, the seatbelt retractor 1 includes a spindle assembly 10 around which a seatbelt (not depicted) is wound, a pretensioner 20 that activates the spindle assembly 10 to wind the seatbelt, and a frame 30 that supports the spindle assembly 10 and the pretensioner 20.

The seatbelt retractor 1 also includes a winding spring device (not depicted) that biases the spindle assembly 10 in a seatbelt retracting direction D1, an acceleration sensor that detects the horizontal acceleration of the vehicle, and a locking mechanism that locks the seatbelt payout operation in accordance with the acceleration detected by the acceleration sensor.

### (Spindle Assembly 10)

The spindle assembly 10 is an example of a configuration that can rotate in a retracting direction D1 by the pretensioner 20 to retract the seatbelt, and then rotate in a payout direction D2 by the force of an occupant applied on the seatbelt to pay out the seatbelt. The spindle assembly 10 is rotatably supported by the frame 30. Hereinafter, the rotation of the spindle assembly 10 in the retracting direction D1 may be referred to as "retraction rotation", and the rotation in the payout direction D2 may be referred to as "payout rotation".

The spindle assembly 10 is also provided with a stopping device (not depicted). This stopping device is configured to stop activation of the pretensioner 20 and to stop rotation of the tread head 40 of the spindle assembly 10, which will be described below. The spindle assembly 10 will be described in detail later.

### (Pretensioner 20)

The pretensioner 20 is an example of a device that operates to transmit a force to the spindle assembly 10 to rotate the spindle assembly 10 in the retracting direction D1 via a transfer path. Here, the transfer path is formed by a part of the configuration of the spindle assembly 10. As depicted in FIG. 1 and FIG. 2, the pretensioner 20 includes a drive device 21 that drives the retracting rotation of the spindle assembly 10, a drive cover 22 that supports the drive device 21, and a distance plate 23.

As depicted in FIG. 1, the drive device 21 includes a tube housing 24 attached to the frame 30, a plurality of balls 28 as mass bodies, a gas generator 25, a spring 26, a piston 27 provided in the tube housing 24, and a cap 29 for securing the tube housing 24.

The gas generator 25, piston 27, and cap 29 are configured to eject a plurality of balls 28 from the tube housing 24. The plurality of balls 28 are configured to transmit the thrust from the piston 27 to a tread head 40 located in a transfer path of the spindle assembly 10, which will be described below. The spring 26 is configured to prevent abnormal noise caused by rattling of a plurality of balls 28 inside the tube housing 24 under normal conditions.

As depicted in FIG. 2, the drive cover 22 is configured to rotatably support a first end of the tread head 40. As depicted in FIG. 2, a first end surface of the distance plate 23 is attached to the drive cover 22, and a second end surface of the distance plate 23 is secured to the frame 30 so as to cover the tube housing 24. In other words, the drive cover 22 is secured to the frame 30 via the distance plate 23.

As depicted in FIG. 2, the space inside the assembly of the drive cover 22 and the distance plate 23 forms a space 200 for stowing the tread head 40. An inner peripheral surface 210 of the space 200 and a pinion 410 of the tread head 40 (described below) form a travel path for the plurality of balls 28 of the drive device 21. The travel path is connected to the drive device 21 via an open end 211 of the tube housing 24.

### (Frame 30)

The frame 30 is secured to the vehicle when the seatbelt retractor 1 is installed in the vehicle. As depicted in FIG. 1 and FIG. 2, the frame 30 includes a frame body 31 and a pawl 32 provided on the frame body 31.

The frame body 31 is configured to secure the pretensioner 20 and to stow the spindle assembly 10. The pawl 32 is a structure for regulating the rotation direction of a lock ring 80 of the spindle assembly 10, which will be described below.

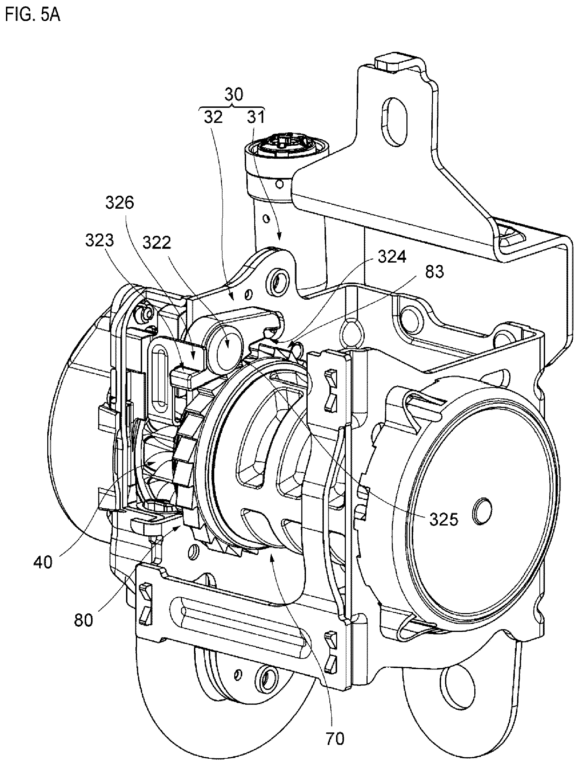

As depicted in FIG. 1 and FIG. 5A, the pawl 32 has a pawl body 321, a rotating shaft 322 that rotatably supports the pawl body 321, a spring device 323 that biases the pawl body 321 so as to press the pawl body 321 against the lock ring 80 of the spindle assembly 10 described below, and a pawl stopper 326. The pawl body 321 has a claw part 324 and a flat part 325.

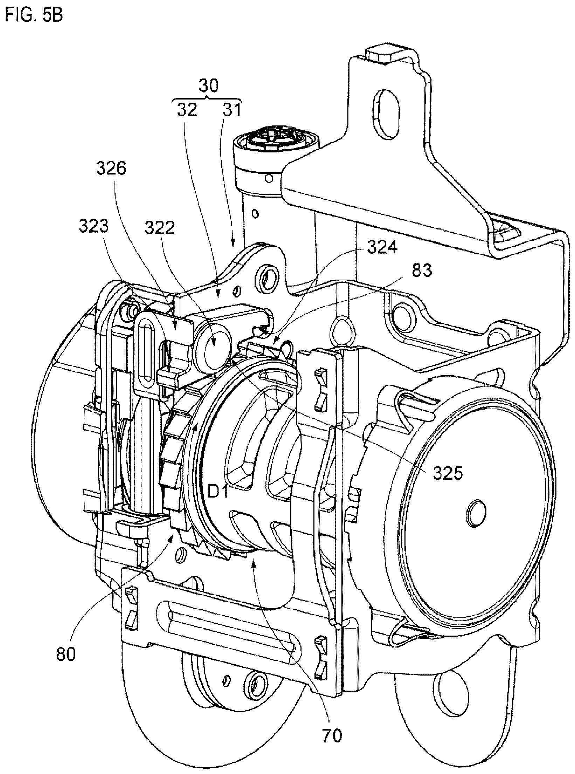

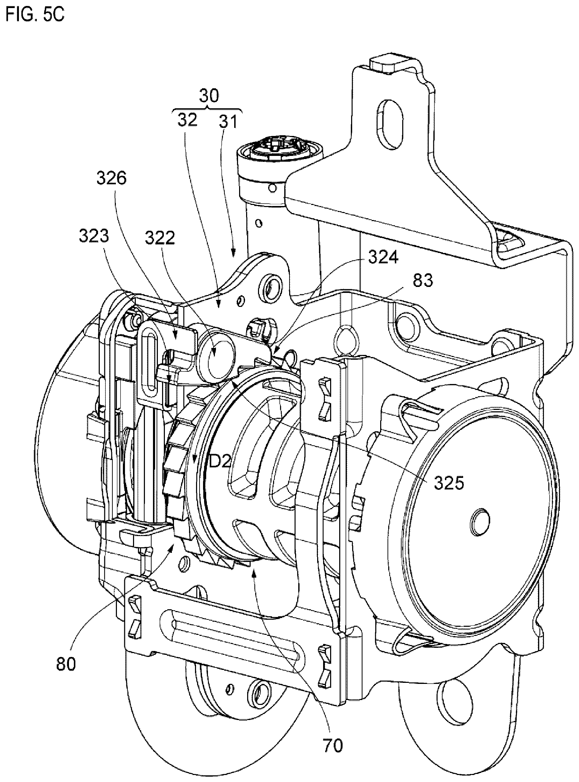

The claw part 324 is an example of an engaging part provided on the frame 30 for engaging with the lock ring 80 of the spindle assembly 10 described below. Before the pretensioner 20 is activated, the pawl 32 is secured by the pawl stopper 326 in a position so as to not mesh with ratchet teeth 83 of the lock ring 80, described below, as depicted in FIG. 5A. When the pretensioner 20 is activated and the spindle 70 rotates in the retracting direction D1, the pawl stopper 326 displaces from the position depicted in FIG. 5A to the position depicted in FIG. 5B based on the activation of the pretensioner 20. As a result, the pawl 32 is rotated by the spring device 323 in a direction so as to mesh with the ratchet teeth 83 of the lock ring 80, as depicted in FIG. 5C. The pawl 32 allows the lock ring 80 and the spindle 70 to rotate in the retracting direction D1 based on contact between the flat part 325 and the ratchet teeth 83 of the lock ring 80. On the other hand, when the spindle 70 rotates in the payout direction D2, the pawl 32 engages with the ratchet teeth 83 of the lock ring 80 as depicted in FIG. 5C, preventing the lock ring 80 and the spindle 70 from rotating in the payout direction D2. In this manner, the lock ring 80 is secured to the frame 30 by the pawl 32.

The pretensioner 20 is activated in the event of a vehicle collision. Specifically, when the gas generator 25 is ignited, the gas pressure inside the tube housing 24 increases, and the ball 28 in the tube housing 24 is pushed by the piston 27 and ejected from the open end 211 into the travel path. Furthermore, the ball 28 that has entered the travel path meshes with a pinion 43 of the tread head 40 described below, transmitting the propulsive force from the piston 27 to the transfer path in which the tread head 40 is located, thereby rotating the spindle assembly 10 in the retracting direction D1 to retract the seatbelt. Thereafter, when ejection of the ball 28 stops, operation of the pretensioner 20 stops. At the same time, the stopping device is activated to stop rotation of the tread head 40. Furthermore, after the spindle assembly 10 stops retracting the seatbelt, a part of the spindle assembly 10 rotates in the seatbelt payout direction D2 due to the load of the occupant being applied on the seatbelt and then stops. Operation of the spindle assembly 10 will be described in detail below.

In the following description, rotation of the spindle assembly 10 in the retracting direction D1 when the pretensioner 20 is activated will be referred to as "retracting rotation", and the process in which the spindle assembly 10 performs the retracting rotation will be referred to as the "retracting process". The rotation of a part of the spindle assembly 10 in the payout direction D2 after the pretensioner 20 has stopped operating is referred to as "payout rotation", and the process in which the spindle assembly 10 performs the payout rotation is referred to as the "payout process". In addition, the time when the lock ring 80 begins to rotate in the payout direction D2 and the time when the lock ring 80 has rotated slightly in the payout direction D2 are sometimes referred to as the "start of payout rotation" of the lock ring 80.

### [Spindle Assembly 10 Structure]

Next, the structure of the spindle assembly 10 will be described in detail with reference to FIG. 1 to FIG. 7F.

As depicted in FIG. 1 and FIG. 2, the spindle assembly 10 includes a spindle 70 around which a seatbelt is wound, a tread head 40, a torsion bar 50, and a sleeve 60 that are provided in a transfer path that transmits force from the pretensioner 20 to the spindle 70, a lock ring 80 that is provided between the tread head 40 and the spindle 70, and a stopper 90 that can stop payout rotation of the spindle 70.

### (Spindle 70)

The spindle 70 is an example of a structure for winding a seatbelt. The spindle 70 has a cylindrical shape. As depicted in FIG. 1 to FIG. 4, the spindle 70 has an open end 71, a closed end 72 opposite the open end 71, a mounting part 73 for attaching a seatbelt provided on the outer peripheral surface 710 of the cylinder, an internal space 74 formed inside the cylinder for stowing a part of the torsion bar 50, a groove 75 for engaging with an end of the torsion bar 50 provided in the internal space 74 side of the closed end 72, and a second engagement receiving part 76 for engaging with the sleeve 60 provided on the inner peripheral surface of the cylinder.

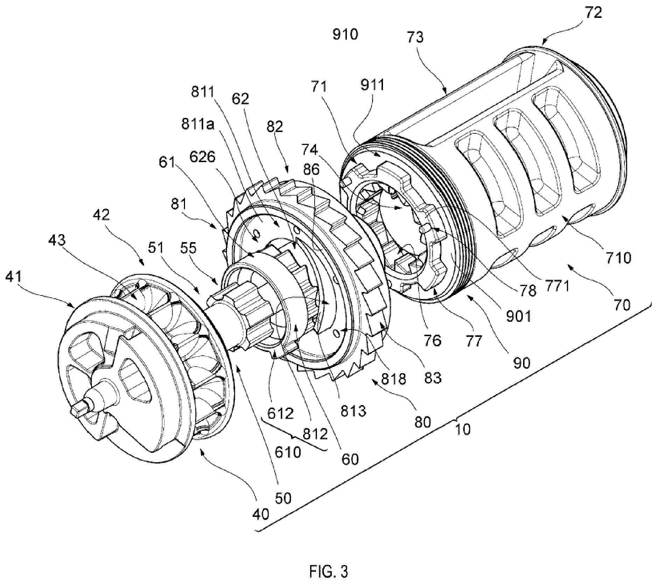

The groove 75 has, for example, a Torx shape. As depicted in FIG. 1 and FIG. 3, an outer peripheral Torx part 77 is provided on the outer peripheral surface of the open end 71 for engaging with an inner peripheral Torx part 93 of a stopper 90, which will be described below. As depicted in FIG. 1 and FIG. 3, a mounting pin 78 for engaging with the lock ring 80 is provided on an end surface 771 of the outer circumferential Torx part 77.

The mounting pin 78 is an example of a first mounting part for mounting the lock ring 80 to the spindle 70. The mounting pin 78 is inserted into a mounting hole 818 of the lock ring 80 (described below) and coupled with the mounting hole 818 to mount the lock ring 80 to the spindle 70. In addition, the mounting pin 78 is a thin pin and is configured so as to be easily sheared off when relative rotation occurs between the spindle 70 and the lock ring 80. The shearing of the mounting pin 78 releases the connection between the spindle 70 and the lock ring 80.

### (Tread head 40)

The tread head 40 is an example of a configuration that receives force from the pretensioner 20 and rotates in the retracting direction D1, that is, a configuration that is provided at the most upstream side of the transfer path. The tread head 40 has a cylindrical shape. As depicted in FIG. 1 to FIG. 4, the tread head 40 includes a closed end 41 rotatably attached to the drive cover 22 of the pretensioner 20, an open end 42 opposite the closed end 41, a pinion 43 formed on the outer peripheral surface of a cylinder, an internal space 44 formed inside the cylinder for stowing a second part of the torsion bar 50, and a groove 45 for engaging with a second end of the torsion bar 50 provided in the internal space 44 side of the closed end 41.

The groove 45 has, for example, a Torx shape. As depicted in FIG. 2, the open end 42 is provided with a first mounting part 46 for engaging with a first end 81 of the lock ring 80, which will be described below. Furthermore, when activation of the pretensioner 20 is stopped by a stopping device (not depicted), the tread head 40 stops rotating relative to the frame body 31.

### (Torsion Bar 50)

The torsion bar 50 is an example of a configuration that transmits the retracting rotation of the tread head 40 to the sleeve 60. As depicted in FIG. 1 and FIG. 2, the torsion bar 50 has a first bar 51 and a second bar 52 that are coaxially arranged. The first bar 51 and the second bar 52 are separate parts having different properties. The torsional rigidity of the first bar 51 is greater than the torsional rigidity of the second bar 52. In the example depicted in FIG. 1 and FIG. 2, the first bar 51 is formed to be thicker than the second bar 52.

As depicted in FIG. 1 and FIG. 2, the first bar 51 has a first head side end part 53 secured in the groove 45 of the tread head 40 and a first sleeve side end part 55 secured to the inner peripheral surface of the sleeve 60. As depicted in FIG. 2, the first sleeve side end part 55 is provided with a groove 57. The second bar 52 has a second spindle side end part 54 secured to the spindle 70 and a second sleeve side end part 56 mounted to the first sleeve side end part 55, as depicted in FIG. 1 and FIG. 2.

Each of the first head side end part 53, the first sleeve side end part 55, and the second spindle side end part 54 has a Torx shape. The first sleeve side end part 55 is an example of a first engagement receiving part for engaging with a first engaging part 623 of the sleeve 60 described below. The first sleeve side end part 55 is configured not to rotate relative to the first engaging part 623 but to be slidable in the direction of the rotation axis.

The second sleeve side end part 56 is press-fitted into the groove 57 in the first sleeve side end part 55 and is coupled to the first sleeve side end part 55. In other words, the first bar 51 and the second bar 52 are connected together as a unit without relative rotation by the connection of the second sleeve side end part 56 with the first sleeve side end part 55.

Although the torsion bar 50 has been described herein as being composed of two bars, the torsion bar 50 may be composed of three or more bars, or may be composed of a single bar having portions with different properties along the longitudinal direction. In addition, the method of connecting the first bar 51 and the second bar 52 is not limited to press-fitting, and other connecting methods such as welding may be used.

### (Sleeve 60)

The sleeve 60 is an example of a configuration that can transmit the retracting rotation of the first bar 51 of the torsion bar 50 to the spindle 70. The sleeve 60 is coupled to the outer peripheral surface (first sleeve side end part 55) of the first bar 51 in the transfer path, and is configured to be detachably attached to the spindle 70. Specifically, the sleeve 60 is connected to the spindle 70 so as to rotate the spindle 70 in the retracting direction D1 when the pretensioner 20 is activated, and is configured to separate from the spindle 70 after a prescribed stroke by causing the spindle 70 to rotate in the belt payout direction D2 based on the load of the occupant applied to the belt after activation of the pretensioner 20 is stopped. Here, the prescribed stroke is, for example, a prescribed angle that the sleeve 60 rotates in the payout direction D2 due to the payout rotation of the spindle 70.

The sleeve 60 is cylindrical. As depicted in FIG. 1 to FIG. 4, the sleeve 60 has a first portion 61 including an open end facing the tread head 40, and a second portion 62 with an open end that is inserted into the spindle 70. The diameter of the outer peripheral surface 611 of the first portion 61 is larger than the diameter of the outer peripheral surface 621 of the second portion 62. In addition, the sleeve 60 is configured to engage with the spindle 70 via a second engaging part 626 of the second portion 62, which will be described below.

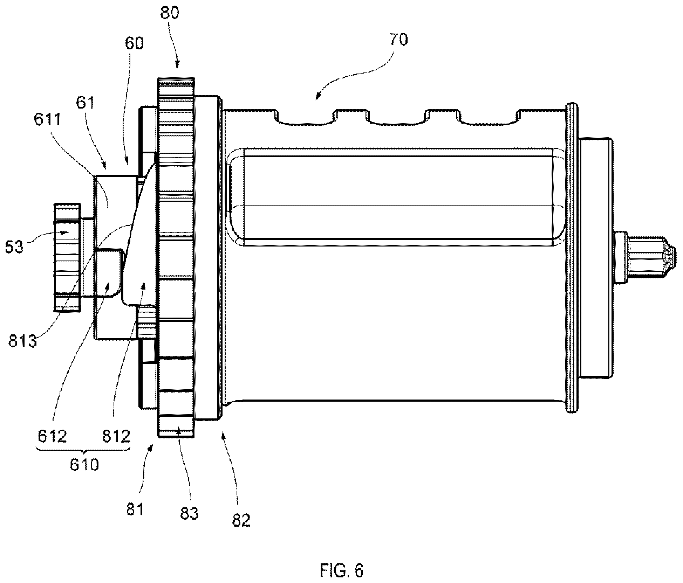

As depicted in FIG. 3, a protrusion 612 is provided on the outer peripheral surface 611 of the first portion 61. As depicted in FIG. 3 and FIG. 6, the protrusion 612 constitutes a displacing part 610 together with a cam 812 provided on the lock ring 80, which will be described below. When the displacing part 610 functions, the displacing part 610 displaces the sleeve 60 in the first direction (see FIG. 1) to separate the sleeve 60 from the spindle 70. The protrusion 612 is an example of a first displacing part of the displacing part 610, and the cam 812 is an example of a second displacing part of the displacing part 610. In addition, operation of the displacing part 610 when the displacing part functions will be described in detail in the description of the operation of the spindle assembly 10 described below.

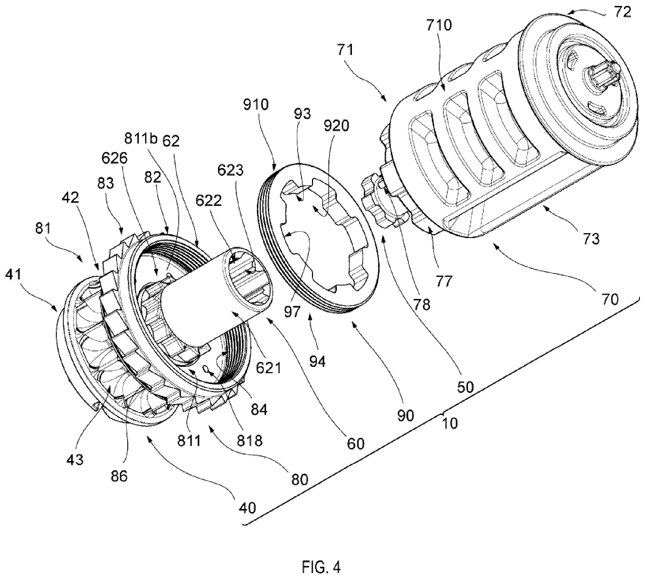

As depicted in FIG. 2 and FIG. 4, a first engaging part 623 is provided on an inner peripheral surface 622 of the second portion 62. The first engaging part 623 has a Torx shape corresponding to the shape of the first sleeve side end part 55 of the first bar 51. The first engaging part 623 can be non-rotatably connected to the first sleeve side end part 55 of the first bar 51 while being slidable in the direction of the rotation axis (see FIG. 1).

As depicted in FIG. 1 and FIG. 3, the second portion 62 has an outer peripheral surface 621 provided with a second engaging part 626 for engaging with the second engagement receiving part 76 of the spindle 70. The second engaging part 626 can be non-rotatably connected to the second engagement receiving part 76 of the spindle 70 so as to be slidable in the direction of the rotation axis (see FIG. 1). In addition, the second engaging part 626 is configured to be able to be engaged with and disengaged from the second engagement receiving part 76 of the spindle 70.

### (Lock Ring 80)

The lock ring 80 is an example of a structure used to detect the payout rotation speed of the spindle 70. When the pretensioner 20 is activated, the lock ring 80 rotates together with the spindle 70 in the retracting direction D1. After activation of the pretensioner 20 is stopped, the lock ring 80 rotates a prescribed number of times in the payout direction D2 based on the payout rotation of the spindle 70. After rotating a prescribed number of times in the payout direction D2, the lock ring 80 is stopped from rotating by the pawl 32.

The lock ring 80 is ring-shaped. As depicted in FIG. 2, the lock ring 80 is provided between the tread head 40 and the spindle 70. As depicted in FIG. 1 to FIG. 4, the lock ring 80 has the first end 81 facing the tread head 40, a second end 82 which is an open end facing the spindle 70, ratchet teeth 83 formed on an outer peripheral surface 810 of the ring, and a female thread 84 formed on the inner peripheral surface 820 of the ring.

The first end 81 has an end plate 811 as depicted in FIG. 1. As depicted in FIG. 1, FIG. 3, and FIG. 4, the end plate 811 has a first end surface 811a facing in a first direction and a second end surface 811b facing in a second direction. The first end surface 811a is provided with a second mounting part 86 for mounting the lock ring 80 to the outer periphery of the first mounting part 46 of the tread head 40. The lock ring 80 is supported by the tread head 40 through mounting of the first mounting part 46 and the second mounting part 86.

In addition, as depicted in FIG. 1 and FIG. 3, the mounting hole 818 is formed at the first end 81, penetrating the end plate 811 in the thickness direction. The mounting hole 818 is an example of a mounting part (second mounting part) for mounting the lock ring 80 to the spindle 70. In addition, the mounting hole 818 is connected to the mounting pin 78 when the pretensioner 20 is activated, and is configured to shear the mounting pin 78 based on the relative rotation between the lock ring 80 and the spindle 70 after activation of the pretensioner 20 is stopped. In this manner, the lock ring 80 is configured to be mounted to the spindle 70 when the pretensioner 20 is activated, and to be separated from the spindle 70 after activation of the pretensioner 20 is stopped.

As depicted in FIG. 1 and FIG. 3, a cam 812 that corresponds to the protrusion 612 of the sleeve 60 is provided on the first end surface 811a of the first end 81. The cam 812 is an example of a second displacing part that corresponds to the protrusion 612 of the sleeve 60. Moreover, the cam 812 is an example of a cam structure. Here, the cam structure need not be a configuration like the cam 812, but may be a cam groove or the like.

The female thread 84 is configured to be screwed onto a male thread 94 of a stopper 90, which will be described below. As depicted in FIG. 4, the female thread 84 is formed from the other end 82 to the second end surface 811b. This manner of female thread 84 enables an end part 911 of the stopper 90 to come into contact with the second end surface 811b at a prescribed number of rotations, thereby securing the stopper 90 so as not to rotate relative to the lock ring 80.

The ratchet teeth 83 are an example of an engagement receiving part that can engage with the claw part 324 of the pawl 32. The ratchet teeth 83, together with the pawl 32, constitute a locking mechanism that stops the payout rotation of the lock ring 80. During the retracting process, the ratchet teeth 83 of the lock ring 80 and the claw part 324 of the pawl 32 do not mesh with each other, and both permit retracting rotation of the lock ring 80. On the other hand, when the lock ring 80 is rotated in the payout direction D2 by the spindle 70, the ratchet teeth 83 of the lock ring 80 and the claw part 324 of the pawl 32 mesh with each other, securing the lock ring 80 to the frame 30 and stopping rotation of the lock ring 80 in the payout direction D2. Furthermore, relative rotation between the lock ring 80 and the spindle 70 occurs thereafter.

In addition, when relative rotation occurs between the lock ring 80 and the spindle 70, the stopper 90 rotates with respect to the lock ring 80 together with the spindle 70. In this manner, by obtaining the number of times that the stopper 90 has rotated relative to the lock ring 80, it is possible to detect the number of payout rotations of the spindle 70 in the payout direction D2 after activation of the pretensioner 20 has stopped.

In addition, when the lock ring 80 stops, the mounting pin 78 of the spindle 70 is sheared by the mounting hole 818 of the stopped lock ring 80. In this manner, the lock ring 80 is disconnected from the spindle 70.

### (Stopper 90)

The stopper 90 is an example of a configuration for stopping payout rotation of the spindle 70. As depicted in FIG. 2 and FIG. 4, the stopper 90 is provided between the ring inner peripheral surface 820 of the lock ring 80 and the outer peripheral Torx part 77 provided on the outer peripheral surface of the open end of the spindle 70. The stopper 90 is ring-shaped. As depicted in FIG. 1, FIG. 2, and FIG. 4, the stopper 90 has a stopper outer peripheral surface 910 that is capable of rotating relative to the lock ring 80, and a stopper inner peripheral surface 920 that engages with the outer peripheral Torx part 77 of the spindle 70.

As depicted in FIG. 1 and FIG. 4, the stopper inner peripheral surface 920 is provided with an inner peripheral Torx part 97 for engaging with the outer peripheral Torx part 77 of the spindle 70. The stopper 90 is provided so as to be movable and not rotate relative to the spindle 70 by the engagement between the inner peripheral Torx part 97 and the outer peripheral Torx part 77 of the spindle 70. Therefore, the stopper 90 can rotate together with the spindle 70.

As depicted in FIG. 1 and FIG. 4, the stopper outer peripheral surface 910 is provided with a male thread 94 for screwing into the female thread 84 of the lock ring 80. When the spindle 70 rotates in the payout direction D2 relative to the lock ring 80, the stopper 90 is screwed from the second end 82 to the first end 81 of the lock ring 80 along the female thread 84 of the lock ring 80 so as to approach the second end surface 811b of the lock ring 80, and displaces in the separation direction along the outer peripheral Torx part 77 of the spindle 70. Also, as depicted in FIG. 1 to FIG. 3, when an end surface 901 of the end part 911 of the stopper 90 comes into contact with the second end surface 811b of the lock ring 80, the stopper 90 is secured to the lock ring 80 and rotation of the stopper 90 is stopped. As a result, the spindle 70 engaged with the stopper 90 is also stopped from rotating.

### <Operation of Spindle Assembly 10>

Next, the operation of the spindle assembly 10 during a vehicle collision will be described in detail with reference to FIG. 1 through FIG. 7F.

As described above, the spindle assembly 10 is configured such that, in the event of a vehicle collision, the pretensioner 20 is activated, causing the spindle assembly 10 to perform retracting rotation, and then, when activation of the pretensioner 20 is stopped, retracting rotation of the spindle assembly 10 is stopped, and a part of the spindle assembly 10 performs payout rotation and then operation of the entire spindle assembly 10 stops. For this reason, the following will explain in detail the operation of the spindle assembly 10 during a vehicle collision in the following order: the "retracting process" when the pretensioner 20 is activated, the "state immediately after retracting is stopped", the "payout process", and the "activation stopped state" after the activation of the pretensioner 20 is stopped.

### [When the pretensioner 20 is activated]

### (Retracting process)

In the event of a vehicle collision, the pretensioner 20 is activated, causing the spindle assembly 10 to rotate in a retracting direction D1 to wind the seatbelt, thereby starting the retracting process. In the retracting state, the force from the pretensioner 20 is output to the transfer path and transmitted to the spindle 70 via the tread head 40, the first bar 51 of the torsion bar 50, and the sleeve 60 in that order. The force causes the spindle 70 to rotate in the retracting direction D1.

In this case, due to the rotation of the first bar 51 in the retracting direction D1, the second bar 52 connected to the first bar 51 is also rotated in the retracting direction D1. In addition, the second spindle side end part 54 and a second sleeve side end part 56 of the second bar 52 are secured to the spindle 70 and the first bar 51, respectively. As the first bar 51 and the spindle 70 each rotate in the retracting direction D1, the second bar 52 is not twisted. In addition, as the spindle 70 performs retracting rotation, the stopper 90 and the lock ring 80 engaged with the spindle 70, are also rotated in the retracting direction D1 in conjunction with the rotation of the spindle 70.

During the retracting process, the first engaging part 623 of the sleeve 60 and the first sleeve side end part 55 of the first bar 51 are engaged with each other. The sleeve 60 is connected to the first bar 51 by the connection between the first engaging part 623 and the first sleeve side end part 55. Furthermore, the sleeve 60 is rotated in the retracting direction D1 by the first bar 51.

During the retracting process, the second engaging part 626 of the sleeve 60 and the second engagement receiving part 76 of the spindle 70 are engaged with each other. The sleeve 60 is connected to the spindle 70 by a second connection between the second engaging part 626 and the second engagement receiving part 76. The sleeve 60 then transmits the retracting rotation of the first bar 51 to the spindle 70, causing the spindle 70 to rotate in the retracting direction D1.

In addition, during the retracting process, the protrusion 612 of the sleeve 60 and the cam 812 of the lock ring 80 are each rotated at the same speed in the retracting direction D1 by the retracting rotation of the sleeve 60 and the spindle 70, respectively. As a result, the protrusion 612 does not displace along the cam 812, and the sleeve 60 does not displace in the separation direction.

Also, during the retracting process, the mounting pin 78 of the spindle 70 is engaged with the mounting hole 818 of the lock ring 80. Since the spindle 70 and the lock ring 80 rotate at the same speed in the retracting direction D1, the mounting pin 78 is not sheared, and the lock ring 80 performs retracting rotation together with the spindle 70.

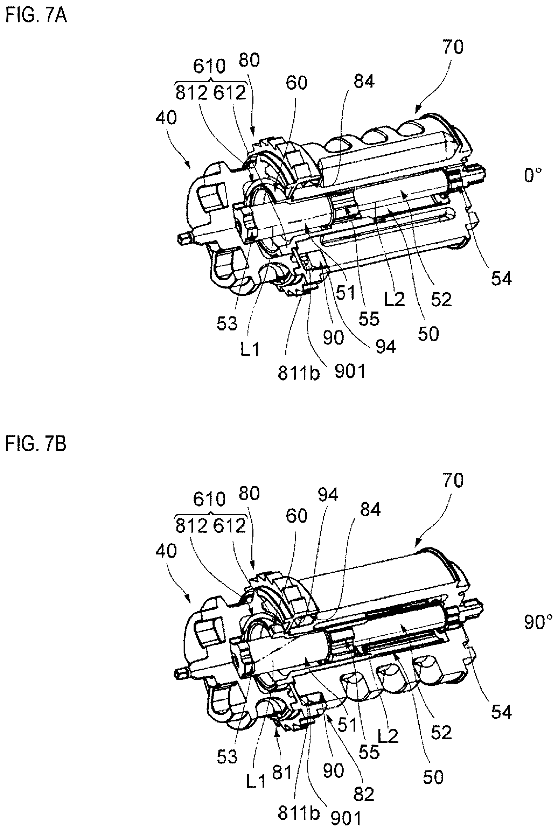

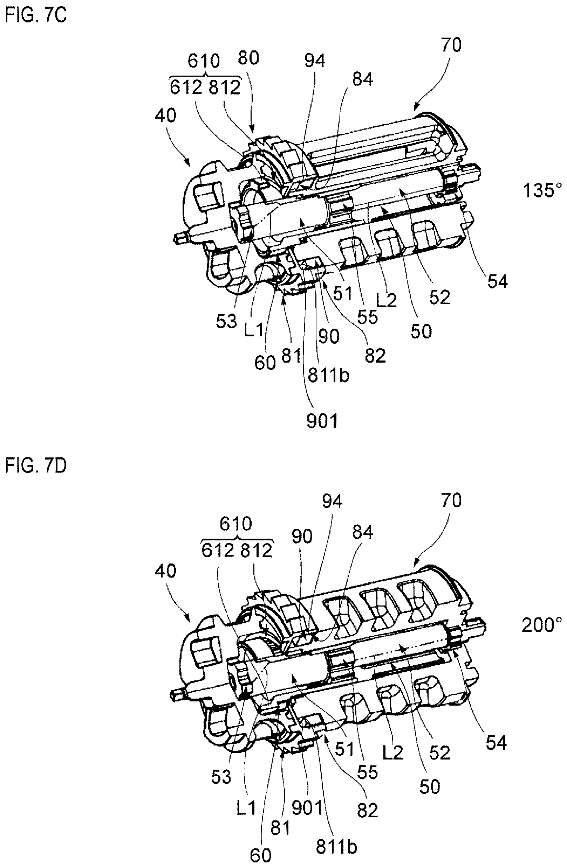

During the retracting process, the stopper 90 is positioned on the second end 82 side of the lock ring 80 as depicted in FIG. 7A. Since the stopper 90 and the lock ring 80 are rotated by the spindle 70 at the same speed in the retracting direction D1, no relative rotation occurs between the stopper 90 and the lock ring 80. Therefore, the stopper 90 does not displace along the female thread 84 of the lock ring 80 toward the second end surface 811b of the lock ring 80.

Furthermore, during the retracting process, as depicted in FIG. 5B, the ratchet teeth 83 of the lock ring 80 do not mesh with the claw part 324 of the pawl 32, but are in contact with the flat part 325 of the pawl 32 which continues to rotate in the retracting direction D1 while flicking the claw part 324 of the pawl 32. That is, the ratchet teeth 83 of the lock ring 80 and the pawl 32 permit the lock ring 80 to perform retracting rotation.

### [After activation of the pretensioner 20 is stopped]

### (State immediately after retracting is stopped)

Thereafter, when the activation of the pretensioner 20 is stopped, the output from the pretensioner 20 to the transfer path is stopped. By stopping the output, rotation of each component of the spindle assembly 10 in the retracting direction D1 is stopped.

When the spindle 70 starts to rotate in the payout direction D2 based on the load of the occupant applied to the seatbelt, the lock ring 80 engaged with the spindle 70 also starts to rotate in the payout direction D2. On the other hand, when the lock ring 80 rotates slightly in the payout direction D2, the ratchet teeth 83 of the lock ring 80 rotate from the flat part 325 of the pawl 32 toward the claw part 324 and mesh with the claw part 324, as depicted in FIG. 5C. This meshing secures the lock ring 80 to the frame 30, preventing the lock ring 80 from rotating in the payout direction D2.

Also, the lock ring 80 is secured to the frame 30 by the pawl 32, and the stopping device is activated to stop the tread head 40 so that the position of the tread head 40 relative to the frame 30 does not change. In this manner, retracting rotation of the tread head 40 is stopped. Furthermore, when the tread head 40 stops, the first bar 51, the sleeve 60, and the spindle 70, which are provided in the transfer path, also stop in this order.

In this case, since both the first bar 51 and the spindle 70 are stopped, the second bar 52 is not twisted. Furthermore, since both the tread head 40 and the spindle 70 are stopped, the first bar 51 is not twisted.

### (Payout Process)

Thereafter, the spindle 70 continues to rotate in the payout direction D2 due to the load of the occupant applied to the seatbelt. In this case, because the lock ring 80 is secured to the frame 30, rotation of the spindle 70 causes the mounting pin 78 to be sheared by a wall part of the mounting hole 818, releasing the connection between the spindle 70 and the lock ring 80. When the spindle 70 is separated from the lock ring 80, relative rotation occurs between the two.

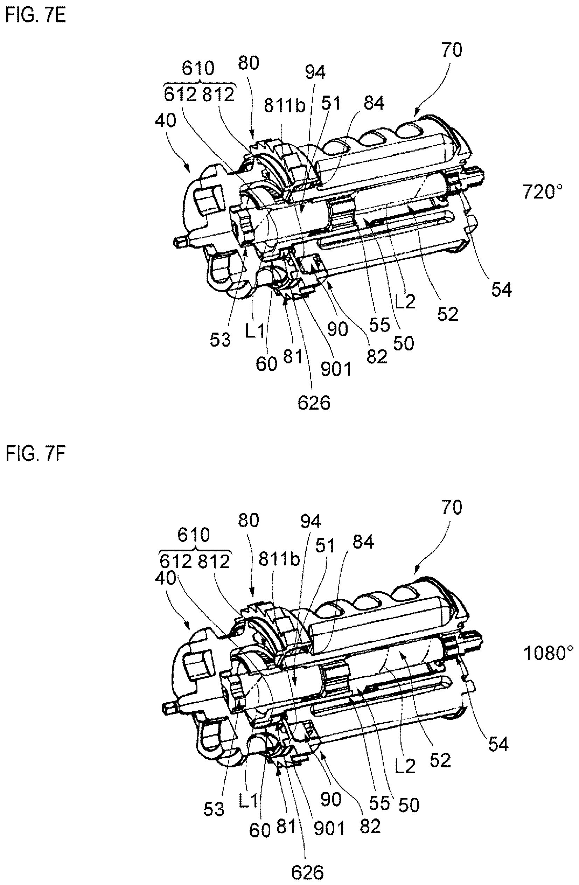

During the payout process, the sleeve 60 separates from the spindle 70 after a prescribed stroke has elapsed since payout rotation of the spindle 70 started. In the following description, during the payout process, the period from when the payout rotation of the spindle 70 starts to when the sleeve 60 and the spindle 70 are separated, as depicted in FIG. 7A to FIG. 7D, will be referred to as the "first period", and the period from when the sleeve 60 and the spindle 70 are separated to when the payout rotation of the spindle 70 stops, as depicted in FIG. 7E and FIG. 7F, will be referred to as the "second period".

### (First Period)

In the first period, due to the payout rotation of the spindle 70, the protrusion 612 of the sleeve 60 rotates together with the spindle 70 in the payout direction D2 and begins to interfere with a contact part 813 of the cam 812 of the lock ring 80. That is, the displacing part 610 starts to function. Here, the interference between the protrusion 612 and the contact part 813 of the cam 812 means that the protrusion 612 comes into contact with the contact part 813 of the lock ring 80 at rest, and rotates relative to the lock ring 80. Interference between the protrusion 612 and the cam 812 causes the sleeve 60 to displace in a first direction (see FIG. 1) away from the spindle 70.

To explain in more detail, in the first period, the displacing part 610 functions due to the payout rotation of the spindle 70, and the second engaging part 626 of the sleeve 60 has a second moving state in which the second engaging part displaces in the first direction (see FIG. 1) relative to the second engagement receiving part 76 while in contact with the second engagement receiving part 76 of the spindle 70. Furthermore, while the sleeve 60 maintains a connection with the spindle 70 based on the second displacement state between the second engaging part 626 and the second engagement receiving part 76, the sleeve is rotated in the payout direction D2 by the payout rotation of the spindle 70, and displaced in the first direction (see FIG. 1) along the second engagement receiving part 76 by activation of the displacing part 610.

In addition, in the first period, the displacing part 610 is activated by the payout rotation of the spindle 70, and the first engagement part 623 of the sleeve 60 has a first moving state in which the sleeve displaces in the first direction (see FIG. 1) relative to the first sleeve side end part 55 of the first bar 51. Furthermore, due to the first displacement state between the first engaging part 623 and the first sleeve side end part 55, the sleeve 60 displaces in the separation direction, transmitting the payout rotation of the spindle 70 to the first sleeve side end part 55 of the first bar 51.

In addition, the first bar 51 has a first head side end part 53 connected to the tread head 40, and a first sleeve side end part 55 to which a force is applied in the payout direction by the load of the occupant transmitted in that order to the spindle 70 and the sleeve 60. As a result, the first bar 51 is twisted from the first sleeve side end part 55 as depicted by the marked line L1 of the first bar 51 in FIG. 7B to FIG. 7D. On the other hand, in this case, the second sleeve side end part 56 of the second bar 52 is mounted to the spindle 70 via the sleeve 60, and the second spindle side end part 54 of the second bar 52 is coupled to the spindle 70. That is, both ends of the second bar 52 are secured to the spindle 70. Therefore, the second bar 52 is not twisted by the payout rotation of the spindle 70, as depicted by the marked line L2 of the second bar 52 in FIG. 7B to FIG. 7D.

In addition, in the first period, as depicted in FIG. 7B to FIG. 7D, the stopper 90 is screwed along the female thread 84 of the lock ring 80 from the second end 82 to the first end 81 of the lock ring 80 by the payout rotation of the spindle 70, and displaces in the separation direction along the outer peripheral Torx part 77 of the spindle 70. Furthermore, the stopper 90 approaches the second end surface 811b of the lock ring 80. In this manner, in the first period, the load of the occupant applied to the seatbelt is transmitted in the order of the spindle 70, the sleeve 60, the first bar 51, and the tread head 40.

### (Second Period)

When the protrusion 612 passes the contact part 813 of the cam 812, the sleeve 60 is separated from the spindle 70. In the second period, the sleeve 60 is separated from the spindle 70, and thus rotation in the payout direction D2 and the displacement in the first direction (see FIG. 1) are stopped.

More specifically, in the second period, relative rotation between the protrusion 612 and the cam 812 is stopped. In this case, the second engaging part 626 of the sleeve 60 and the second engagement receiving part 76 of the spindle 70 do not come into contact with each other. In other words, the sleeve 60 and the spindle 70 are in a disengaged state, as depicted in FIG. 7E and FIG. 7F.

In this disengaged state, the spindle 70 transmits the load of the occupant to the second bar 52 via the connection between the groove 75 and the second spindle side end part 54 of the second bar 52, and then further transmits the load of the occupant to the first bar 51 via the connection between the second sleeve side end part 56 of the second bar 52 and the first sleeve side end part 55 of the first bar 51. In this process, the second bar 52, which has a smaller torsional rigidity, is twisted by the load of the occupant that is transmitted, as depicted in FIG. 7E and FIG. 7F. On the other hand, the first bar 51 is subjected to a torsional force due to the load of the occupant that is transmitted, but since the torsional rigidity of the first bar 51 is higher than that of the second bar 52, for the marked line L1, the first bar 51 is in a state of not being twisted further than the marked line L1 of the first bar 51 depicted in FIG. 7D, as depicted in FIG. 7E and FIG. 7F. In other words, twisting of the first bar 51 due to the load of the occupant ends at the end of the first period, while in the second period, the second bar 52 twists to absorb the load of the occupant.

In the second period, as depicted in FIG. 7F, the stopper 90 is screwed along the female thread 84 of the lock ring 80 from the second end 82 of the lock ring 80 to the second end surface 811b of the first end 81 by the payout rotation of the spindle 70, and continues to displace in the separation direction along the outer peripheral Torx part 77 of the spindle 70.

In this manner, in the second period, the load of the occupant applied to the seatbelt is transmitted in the order of the spindle 70, the second bar 52, the first bar 51, and the tread head 40. Compared to the transmission of the occupant's load in the first period, the separation of the sleeve 60 and the spindle 70 in the second period makes it possible to switch the torsional torque caused by the torsion bar 50 after activation of the pretensioner 20 is stopped from the first bar 51, which has a high torsional rigidity, to the second bar 52, which has a low torsional rigidity. In other words, by using the lock ring 80 to displace the sleeve 60 in the first direction (see FIG. 1) and separate the lock ring from the spindle 70, the functioning torsion bar can readily be switched, in other words, switching between the first bar 51 and the second bar 52, to reduce the torsional torque caused by the torsion bar.

### (Activation Stopped State)

Thereafter, as depicted in FIG. 7F, when the end surface 901 of the stopper 90 abuts against the second end surface 811b of the lock ring 80, the second end surface 811b of the lock ring 80 restricts the stopper 90 from rotating relative to the lock ring 80, causing the stopper to stop. Furthermore, rotation of the spindle 70 engaged with the stopper 90 is also stopped, and thereby operation of the spindle assembly 10 is stopped.

Furthermore, when the spindle assembly 10 is in an activation stopped state, the load of the occupant applied to the seatbelt continues to be applied to the spindle 70. In this case, the load of the occupant applied to the seatbelt is transmitted to the frame 30 via the spindle 70, the male thread 94 of the stopper 90, the female thread 84 of the lock ring 80, the ratchet teeth 83 of the lock ring 80, and the pawl 32 in that order.
(1) A seatbelt retractor 1 according to a first aspect includes:
   a spindle 70 with a belt wound thereon;
   a pretensioner 20 that activates to transmit a force for rotating the spindle 70 in a retracting direction of the belt to the spindle 70 via a transfer path;
   a tread head 40 that is provided in the transfer path and that receives the force from the pretensioner 20 and rotates in the retracting direction;
   a torsion bar 50 provided in the transfer path, a first end thereof being secured to the tread head 40 and a second end thereof being secured to the spindle 70; and a lock ring 80 provided between the tread head 40 and the spindle 70,
   wherein
   when the pretensioner 20 is activated, rotation of the tread head 40 in the retracting direction is transmitted to the spindle 70 via the torsion bar 50, so that the lock ring 80 rotates together with the spindle 70 in the retracting direction, while after activation of the pretensioner 20 is stopped, the lock ring 80 is prevented from rotating, permitting the spindle 70 to rotate relative to the lock ring 80 in the belt payout direction D2 due to the load of an occupant applied to the belt; and
   the torsion bar 50 is twisted by the relative rotation of the spindle 70. As a result, the lock ring 80 having a simple configuration can be used to switch the functioning torsion bar portion, and the torsional torque of the torsion bar can be easily adjusted.
(2) With the seatbelt retractor 1 according to Embodiment 1 described above,
   the torsion bar 50 includes a first bar 51 secured to the tread head 40 in the transfer path, and a second bar 52 having properties different from those of the first bar 51 and that is secured to the spindle 70; and
   the seatbelt retractor 1 further includes a sleeve 60 attached to an outer peripheral surface of the first bar 51 in the transfer path and detachably provided on the spindle 70, wherein
   the sleeve 60 is coupled to the spindle 70 so as to rotate the spindle 70 in the retracting direction D1 when the pretensioner 20 is activated, and is configured to rotate together with the spindle 70 in the payout direction D2 based on the relative rotation of the spindle 70 after activation of the pretensioner 20 is stopped, and to separate from the spindle 70 after a prescribed stroke based on interference with the lock ring 80; and
   the sleeve 60 is separated from the spindle 70 to switch from twisting the first bar 51 to twisting the second bar 52. As a result, the sleeve 60 and the spindle 70 can be separated from each other by the interference between the sleeve 60 and the lock ring 80.
(3) With the seatbelt retractor 1 according to Embodiment 1 described above,
   a payout process in which the spindle 70 performs relative rotation after activation of the pretensioner 20 is stopped includes:
   a first period from the start of the relative rotation to a point of separation, and a second period from the separation to the end of the relative rotation; and
   the sleeve 60:
      rotates during activation of the pretensioner 20 in the retracting direction D1 based on rotation of the first bar 51 in the retracting direction D1 ;
      rotates with the spindle 70 in the payout direction D2 during the first period after activation of the pretensioner 20 is stopped, and displaces in a first direction, which is an example of a direction separating from the spindle 70, due to interference with the lock ring 80;
      stops displacing in the first direction during the second period due to separation from the spindle 70,
      rotates in the payout direction D2 based on a load from the occupant transmitted in the order of spindle 70, second bar 52, and first bar 51; and
      thereafter, stops rotation in the payout direction D2. As a result, the connection between the sleeve 60 and the spindle 70 can be easily released.
(4) Furthermore, the seatbelt retractor 1 according to Embodiment 1 described above further includes a displacing part 610 that displaces the sleeve 60 in the separation direction during the first period, and the displacing part 610 has a protrusion 612 that is an example of a first displacing part provided on the sleeve 60, and a cam 812 that is an example of a cam configuration corresponding to the protrusion 612 and is an example of a second displacing part provided on the lock ring 80, and the protrusion 612 is configured to displace in the separation direction while rotating along the cam 812 by rotation of the sleeve 60 in the payout direction D2 during the first period, so as to separate the sleeve 60 from the spindle 70. As a result, the sleeve 60 can be displaced in the separation direction using a simple structure.
(5) In addition, with the seatbelt retractor 1 according to Embodiment 1 described above, when the pretensioner 20 activates, the cam 812 rotates together with the protrusion 612 in the retracting direction D1 due to the retracting rotation of the spindle 70 in the retracting direction D1, while after activation of the pretensioner 20 is stopped, the cam 812 rotates relative to the protrusion 612 while in contact with the protrusion 612 in the first period, and the relative rotation is stopped in the second period. As a result, the relative rotation and displacement of the protrusion 612 and the cam 812 can control the rotation and displacement of the sleeve 60.
(6) With the seatbelt retractor 1 according to Embodiment 1 described above, a first engaging part 623 is provided on the inner peripheral surface of the sleeve 60, and a first sleeve side end part 55, which is an example of a first engagement receiving part that engages with the first engaging part 623 that does not rotate relative to the first engaging part 623 but is displaceable relative to the first engaging part 623, is provided on the outer peripheral surface of the first end of the first bar 51 and during the process in which the sleeve 60 is separated from the spindle 70 after activation of the pretensioner 20 is stopped, the first engaging part 623 of the sleeve 60 displaces relative to the first sleeve side end part 55 of the first bar 51, and the relative rotational force of the spindle 70 is input from the first engaging part 623 of the sleeve 60 to the first sleeve side end part 55 of the first bar 51, while after the sleeve 60 is separated from the spindle 70, the relative rotational force of the spindle 70 is input to the second bar 52. As a result, the sleeve 60 and the first bar 51 can be attached using a simple structure.
(7) With the seatbelt retractor 1 according to Embodiment 1 described above,
   a second engaging part 626 is provided on an outer peripheral surface of the sleeve 60,
   a second engagement receiving part 76 that does not rotate relative to the second engaging part 626 while being displaceable in the first direction relative to the second engaging part 626 and engages therewith is provided on an inner peripheral surface of the spindle 70,
   during the process of the sleeve 60 separating from the spindle 70 after activation of the pretensioner 20 is stopped, the second engaging part 626 of the sleeve displaces in the first direction relative to the second engagement receiving part 76 of the spindle 70, and
   this displacement causes engagement of the second engaging part 626 and the second engagement receiving part 76 to be released and the sleeve 60 to separate from the spindle 70. As a result, the sleeve 60 can be controlled so as to move into and out of engagement with the spindle 70.
(8) With the seatbelt retractor 1 according to Embodiment 1 described above, a stopper 90 is further provided for stopping the relative rotation of the spindle 70 in the payout direction D2, the stopper 90 being provided so as to not rotate relative to the spindle 70 while being displaceable in the first direction relative to the spindle 70, and after activation of the pretensioner 20 is stopped, the stopper 90 displaces in the first direction relative to the spindle 70 based on relative rotation of the spindle 70 in the payout direction D2, and displacement is restricted by the lock ring 80, thereby stopping the relative rotation of the spindle 70 in the payout direction D2. As a result, the payout rotation of the spindle 70 can be stopped using a simple structure.
(9) With the seatbelt retractor 1 according to Embodiment 1, described above, during the first period and after the first bar 51 is twisted by the load of the occupant that is transmitted in order from the spindle 70 and the sleeve 60, the sleeve 60 separates from the spindle 70 such that the first bar is no longer twisted, while the load is not applied to the second bar 52 due to the spindle 70 and the sleeve 60 being engaged, and during the second period, the first bar 51 and the second bar 52 are connected in series and of the first bar 51 and the second bar 52, only the second bar 52 is twisted due to load of the occupant. In this manner, by switching the object to be twisted during the payout process from the first bar 51 to the second bar 52, the torsional torque of the torsion bar 50 can be controlled.
(10) In addition the first bar 51 includes a first head side end part 53 secured to the tread head 40 and a first sleeve side end part 55 engaged with the inner peripheral surface of the sleeve 60 and the second bar 52 includes a second spindle side end part 54 secured to the spindle 70 and a second sleeve side end part 56 attached to the first sleeve side end part 55 or engaged with the inner peripheral surface of the sleeve 60. As a result, the connection between the sleeve 60, the first bar 51, and the second bar 52 can be easily achieved.
(11) With the seatbelt retractor 1 according to Embodiment 1 described above, the torsional rigidity of the first bar 51 is greater than the torsional rigidity of the second bar 52. As a result, after activation of the pretensioner 20 is stopped, the torsional torque of the torsion bar 50 in the second period can be made smaller than the torsional torque of the torsion bar 50 in the first period.

### Embodiment 2

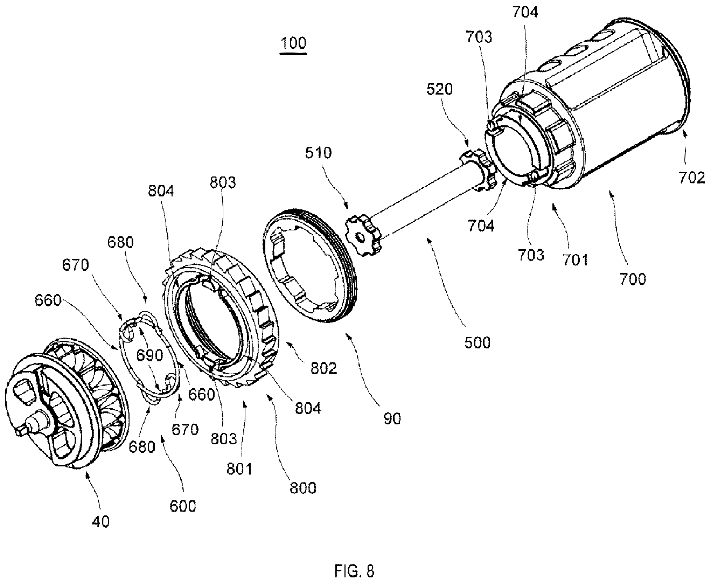

Next, a seatbelt retractor according to Embodiment 2 will be described with reference to FIG. 8 to FIG. 10. Here, the difference between the seatbelt retractor according to Embodiment 2 and the seatbelt retractor 1 according to Embodiment 1 is the configuration of a spindle assembly 100 and an energy absorbing member 600 provided in the spindle assembly 100. The following description will focus on the spindle assembly 100 and the energy absorbing member 600 according to Embodiment 2. In addition, the same portions as those in Embodiment 1 are denoted by the same description codes and the description thereof will be omitted or simplified.

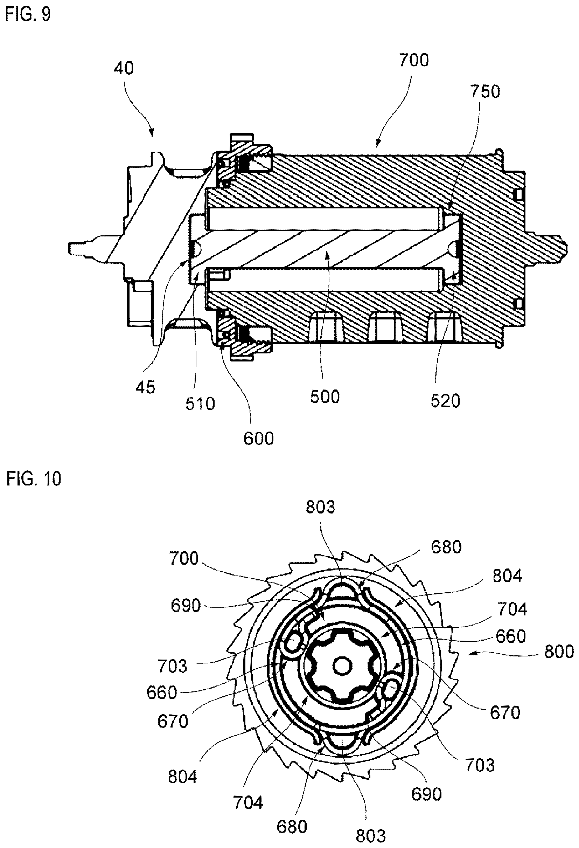

As depicted in FIG. 8 and FIG. 9, the spindle assembly 100 comprises a spindle 700 around which the seatbelt is wound, a tread head 40, a torsion bar 500, and the energy absorbing member 600 which are provided in a transfer path that transmits force from a pretensioner 20 (not depicted) to the spindle 700, a lock ring 800 which can block the transfer path to stop the retracting rotation of the spindle 700, and a stopper 90 which can stop the payout rotation of the spindle 700.

Thus, the difference between the spindle assembly 100 of Embodiment 2 and the spindle assembly 10 of Embodiment 1 is that the spindle assembly 100 of Embodiment 2 achieves the same effect as the combination of the first bar 51, the second bar 52 and the sleeve 60 during the payout process of the spindle assembly 10 of Embodiment 1, by combining the torsion bar 500 and the energy absorbing member 600.

The torsion bar 500 is a single bar. The torsion bar 500 has a first end 510 which engages the tread head 40 and a second end 520 which engages a groove 750 inside the spindle 700, as depicted in FIG. 9.

The lock ring 800 is ring-shaped. As depicted in FIG. 8, the lock ring 800 has a first end 801 and a second end 802. Both the first end 801 and the other end 802 have open ends. As depicted in FIG. 8, the lock ring 800 has a first protrusion 803 and a second protrusion 804 that are provided on an end surface of the first end 801 of the lock ring 800 and are used to squeeze the energy absorbing member 600. The first protrusion 803 and the second protrusion 804 are an example of an interference portion that interferes with the energy absorbing member 600.

The spindle 700 has a cylindrical shape. The spindle 700 has an open end 701 and a closed end 702 opposite the open end 701. The spindle has a mount protrusion 703 and a mounting part 704 provided on the end surface of the open end 701. The mount protrusion 703 is an example of a mounting part that can come into contact with the energy absorbing member 600 of the spindle 700. The mount protrusion 703 and mounting part 704 of the spindle 700 are positioned inside the lock ring 800 so as to protrude through an opening in the first end 801 of the lock ring 800.

The energy absorbing member 600 is secured to the spindle 700 and is an example of a configuration for absorbing energy generated by the payout rotation of the spindle 700 during the payout process. The energy absorbing member 600 is ring-shaped. As depicted in FIG. 8, the energy absorbing member 600 has a first mounting part 660, a second mounting part 680, and an abutment part 670, which are distributed around the circumference of a ring. The abutment part 670 has an opening 690.

Furthermore, as depicted in FIG. 10, the energy absorbing member 600 is provided on the opening end 701 of the spindle 700 and the first end 801 of the lock ring 800 so that the first mounting part 660 is sandwiched between the mounting part 704 and the second protrusion 804, the second mounting part 680 meshes with the first protrusion 803, and the abutment part 670 meshes with the mount protrusion 703.

Thus, during the retracting process, all components of the spindle assembly 100 undergo retracting rotation. In this case, the mount protrusion 703 does not displace relative to the abutment part 670, and the energy absorbing member 600 does not absorb energy. Furthermore, the torsion bar 500 is not twisted.

When the driving force from the pretensioner 20 exceeds the transmission capacity of the torsion bar 500 and the energy absorbing member 600, pre-twisting by the pretensioner 20 occurs. However, even if the torsion bar 500 and the energy absorbing member 600 are twisted, the lock ring 800 and the spindle 700 are not displaced relative to each other when rotating in the retracting direction D1, and therefore the set stroke does not change.

On the other hand, when the payout process starts, the lock ring 800 is secured to the frame 30 and the spindle 700 rotates in the payout direction D2. The payout rotation of the spindle 700 causes the torsion bar 500 to be twisted from the second end 520, and the mount protrusion 703 of the spindle 700 to be rotated in the payout direction D2.

In addition, during the payout process, the first protrusion 803 of the lock ring 800 is configured so that, during the relative rotation of the spindle 70, an interference state with the energy absorbing member 600 is generated and then the interference state is released in response to a change in the rotational angle of the spindle 70. Specifically, during the payout process, the first protrusion 803 displaces toward the opening 690 of the abutment part 670 while abutting against the abutment part 670 of the energy absorbing member 600, and is released from the opening 690 to the outside of the abutment part 670. As a result, the first protrusion 803 is no longer in contact with the energy absorbing member 600.

In addition, during the process in which the first protrusion 803 displaces while in contact with the second mounting part 680, the energy of the payout rotation of the spindle 700 is absorbed by the energy absorbing member 600, and the load required to twist the torsion bar 500 increases. On the other hand, when the first protrusion 803 is released from the opening 690 to the outside of the second mounting part 680 and enters a non-contact process, the first protrusion 803 no longer comes into contact with the energy absorbing member 600, and the energy of the payout rotation of the spindle 700 is not absorbed by the energy absorbing member 600. As a result, the load required to twist the torsion bar 500 is smaller than the load required to twist the torsion bar 500 during the contact process.

According to Embodiment 2, the spindle assembly 100 of Embodiment 2, similar to the spindle assembly 10 of Embodiment 1, can use a simple configuration to achieve switching of torsional torque by the torsion bar after activation of the pretensioner is stopped, and the combination of the torsion bar 500 and the energy absorbing member 600 can achieve the same torsional torque adjustment effect as the combination of the first bar 51, the second bar 52 and the sleeve 60 during the payout process of the spindle assembly 10 of Embodiment 1.

### Embodiment 3

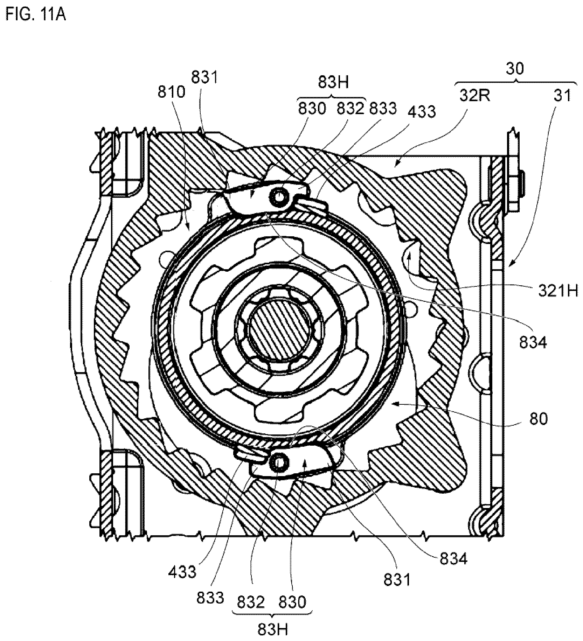

Next, a seatbelt retractor according to Embodiment 3 will be described with reference to FIG. 11A to FIG. 11C. Here, the difference between the seatbelt retractor according to Embodiment 3 and the seatbelt retractor 1 according to Embodiment 1 is the configuration regarding the engagement between the lock ring 80 and the frame 30. The following description will focus on the configuration relating to the engagement between the lock ring 80 and the frame 30 according to Embodiment 3. In addition, the same portions as those in Embodiment 1 are denoted by the same description codes and the description thereof will be omitted or simplified.

As depicted in FIG. 11A, the frame 30 includes a frame main body 31 and a latch ring 32R provided on the frame main body 31. The latch ring 32R is a component for restricting the rotation direction of the lock ring 80. The latch ring 32R includes ratchet teeth 321H on the inner peripheral surface thereof. The ratchet teeth 321H are configured to engage with teeth 831 of a ring pawl 83H of the lock ring 80, which will be described below. In Embodiment 3, the latch ring 32R is described as a part of the frame 30, but the present invention is not limited to this. The latch ring 32R may be a separate member from the frame 30.

As depicted in FIG. 11A, the lock ring 80 has a ring pawl 83H provided on the outer peripheral surface 810 of the ring. The ring pawl 83H is an example of an engagement receiving part that can be engaged with the ratchet teeth 321H of the latch ring 32R of the frame main body 31. As depicted in FIG. 11A, the ring pawl 83H has a pawl main body 830, a rotating shaft 832 that attaches the pawl main body 830 to the outer peripheral surface 810 of the lock ring 80, and a biasing mechanism (not depicted). The pawl main body 830 also has teeth 831 provided on a first side of the rotating shaft 832, an end part 833 provided on a second side of the rotating shaft 832, and an inner side surface 834. The pawl main body 830 is configured to be rotatable about the rotation shaft 832 as a central axis. The biasing mechanism of the rotating shaft 832 is configured to bias the end part 833 with a force that rotates the teeth 831 of the ring pawl toward the latch ring.

The end part 833 is configured to be biased toward the ratchet teeth 321H of the latch ring 32R by the biasing mechanism (not depicted). In a normal condition, the end part 833 is in a first position in contact with a protrusion 433 of the tread head 40, as depicted in FIG. 11A. In this case, the end part 833 is pressed against the protrusion 433 based on the bias of the biasing mechanism. The abutment of the end part 833 with the protrusion 433 holds the teeth 831 of the pawl main body 830 in a position where they do not engage with the ratchet teeth 321H of the latch ring 32R.

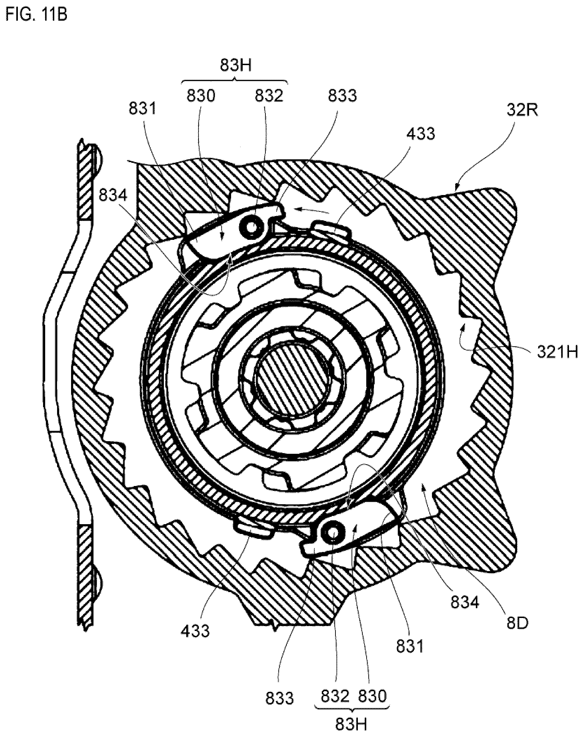

On the other hand, as depicted in FIG. 11B, when the end part 833 displaces to a second position where there is no contact with the protrusion 433 of the tread head 40, the end part 833 attempts to rotate in a direction pressed against the outer peripheral surface 810 of the lock ring 80 due to the bias of the biasing mechanism.

The displacement of end part 833 from the first position depicted in FIG. 11A to the second position depicted in FIG. 11B will now be described. When the end part 833 rotates together with the spindle 70 while in contact with the protrusion 433 of the tread head 40, there is no relative rotation (phase difference) between the tread head 40 and the spindle 70, so the end part 833 and the protrusion 433 are positioned in the first position in contact with each other as depicted in FIG. 11A. On the other hand, when the pretensioner 20 is activated, if the spindle 70 starts to rotate after the tread head 40 due to a delay in the transmission of force from the pretensioner 20, relative rotation between the tread head 40 and the spindle 70 occurs. Such relative rotation pre-twists the first bar 51, which has the first end secured to the tread head 40 and the second end secured to the sleeve 60 connected to the spindle 70. The end part 833 then displaces from the first position depicted in FIG. 11A to the second position depicted in FIG. 11b, and is thereby misaligned with the projection 433. In this case, since the lock ring 80 and the spindle 70 are rotating in the retracting direction D1, the pawl main body 830 is biased by the biasing mechanism to a position enabling engaging with the ratchet teeth 321H, as depicted in FIG. 11B, but does not mesh with the ratchet teeth 321H.

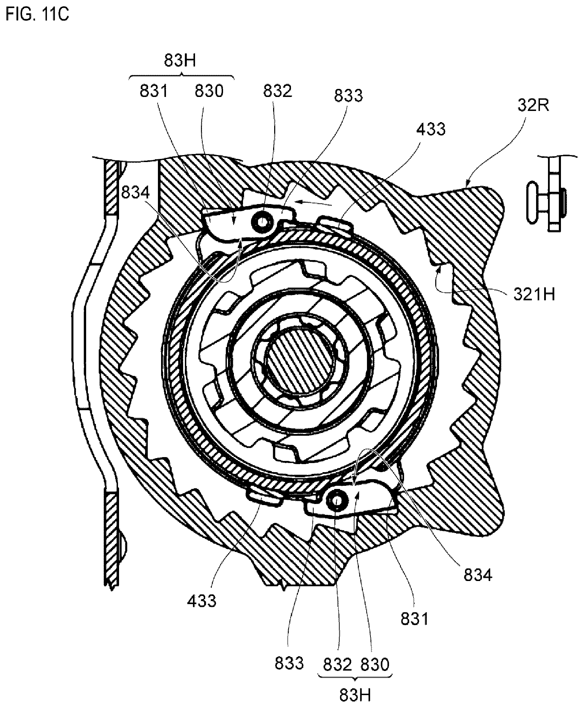

Furthermore, after activation of the pretensioner 20 stops, the spindle 70 rotates in the payout direction D2, so that the pawl main body 830 is pushed toward the ratchet teeth 321H by the biasing mechanism and meshes with the ratchet teeth 321H. Thus, the lock ring 80 is restrained to the frame 30 as depicted in FIG. 11C.

Furthermore, if no relative rotation occurs between the tread head 40 and the lock ring 80 when the pretensioner 20 is activated, the protrusion 433 will not displace and will maintain the state of contact with the end part 833. In this case, the torsion bar 50 is arranged so that the first bar 51 engages with the tread head 40 whose position does not change relative to the frame 30, and the second bar 52 engages with the groove 75 inside the spindle 70. Therefore, when the spindle 70 subsequently performs payout rotation, the torsion bar 50 begins to twist. As a result, the end part 833 separates from the protrusion 433.

According to Embodiment 3, the spindle assembly 10 according to Embodiment 3, like the spindle assembly 10 of Embodiment 1, can use a simple configuration to achieve switching of torsional torque by the torsion bar after activation of the pretensioner is stopped, and can achieve activation of the ring pawl 83H of the lock ring 80 depending on the presence or absence of relative rotation between the tread head 40 and the lock ring 80.

### [EXPLANATION OF CODES]

1. Seatbelt retractor, 10, 100. Spindle assembly, 20. Pretensioner, 21. Drive device, 22. Drive cover, 23. Distance plate, 24. Tube housing, 25. Gas generator, 26. Spring, 27. Piston, 28. Balls, 29. Cap, 30. Frame, 31. Frame main body, 32. Pawl, 32R. Latch ring, 324. Claw part, 40. Tread head, 43. Pinion, 50, 500. Tread head, 51. First bar, 52. Second bar, 53. First head side end part, 54. Second spindle side end part, 55. First sleeve side end part, 56. Second sleeve side end part, 60. Sleeve, 70, 700. Spindle, 80, 800. Lock ring, 83. Ratchet teeth, 90. Stopper, 321, 830. Pawl main body, 321H. Ratchet teeth, 410. Pinion, 500. Torsion bar, 600. Energy absorbing member, 610. Displacing part, 612. Protrusion, 812. Cam, D1. Retracting direction, D2. Payout direction.

## Claims

1. A seatbelt retractor, comprising:
a spindle with a belt wound thereon;
a pretensioner that activates to transmit a force for rotating the spindle in a retracting direction of the belt to the spindle via a transfer path;
a tread head that is provided in the transfer path and that receives the force from the pretensioner and rotates in the retracting direction;
a torsion bar provided in the transfer path, a first end thereof being secured to the tread head and a second end thereof being secured to the spindle; and
a lock ring provided between the tread head and the spindle,
wherein
when the pretensioner is activated, rotation of the tread head in the retracting direction is transmitted to the spindle via the torsion bar, so that the lock ring rotates together with the spindle in the retracting direction, while after activation of the pretensioner is stopped, the lock ring is prevented from rotating, permitting the spindle to rotate relative to the lock ring in the belt payout direction due to the load of an occupant applied to the belt; and
the torsion bar is twisted by the relative rotation of the spindle.

2. The seatbelt retractor according to claim 1, wherein
the torsion bar includes a first bar secured to the tread head in the transfer path, and a second bar having properties different from those of the first bar and that is secured to the spindle; and
the seatbelt retractor further includes a sleeve attached to an outer peripheral surface of the first bar in the transfer path and detachably provided on the spindle, wherein
the sleeve is coupled to the spindle so as to rotate the spindle in the retracting direction when the pretensioner is activated, and is configured to rotate together with the spindle in the payout direction based on the relative rotation of the spindle after activation of the pretensioner is stopped, and to separate from the spindle after a prescribed stroke based on interference with the lock ring; and
the sleeve is separated from the spindle to switch from twisting the first bar to twisting the second bar.

3. The seatbelt retractor according to claim 2, wherein
a payout process in which the spindle performs relative rotation after activation of the pretensioner is stopped has a first period in which the spindle travels from when the relative rotation starts to said separation, and a second period in which the spindle travels from said separation to when the relative rotation stops, and
the sleeve is configured such that, during the first period, while being rotated together with the spindle in the payout direction, the sleeve displaces in a direction away from the spindle due to interference with the lock ring, and during the second period, displacement of the sleeve stops due to being separated from the spindle, and rotation in the payout direction occurs based on the load of the occupant transmitted to the spindle, the second bar, and the first bar, in that order, and then rotation in the payout direction stops.

4. The seatbelt retractor according to claim 3, further comprising a displacing part for displacing the sleeve in the separation direction during the first period, wherein
the displacing part includes a first displacing part having a protrusion or a cam configuration provided on the sleeve, and a second displacing part having a cam configuration or a protrusion provided on the lock ring and corresponding to said protrusion or cam configuration, and
the first displacing part is configured to displace the sleeve in the separation direction so as to separate the sleeve from the spindle during the first period while rotating in contact with the second displacing part based on rotation of the sleeve in the payout direction.

5. The seat belt retractor according to claim 4, wherein the second moving part is configured to rotate in the retracting direction together with the first moving part based on the retracting rotation of the spindle in the retracting direction when the pretensioner is activated, and to rotate relative to the first moving part while in contact with the first moving part during the first period after activation of the pretensioner is stopped, and to stop the relative rotation during the second period.

6. The seatbelt retractor according to claim 2, wherein
a first engaging part is provided on an inner peripheral surface of the sleeve,
a first engagement receiving part that does not rotate relative to the first engaging part while being displaceable relative to the first engaging part is provided on an outer peripheral surface of a first end of the first bar,
during the process of the sleeve separating from the spindle after activation of the pretensioner is stopped, the first engaging part of the sleeve displaces relative to the first engagement receiving part of the first bar and the relative rotation force of the spindle is input from the first engaging part of the sleeve to the first engagement receiving part of the first bar, and
after the spindle separates from the sleeve, the relative rotation force of the spindle is input to the second bar.

7. The seatbelt retractor according to claim 3, wherein
a second engaging part is provided on an outer peripheral surface of the sleeve,
a second engagement receiving part that does not rotate relative to the second engaging part while being displaceable in the separation direction relative to the second engaging part and engages therewith is provided on an inner peripheral surface of the spindle,
during the process of the sleeve separating from the spindle after activation of the pretensioner is stopped, the second engaging part of the sleeve displaces in the separation direction relative to the second engagement receiving part of the spindle, and
this displacement causes engagement of the second engaging part and the second engagement receiving part to be released and the sleeve to separate from the spindle.

8. The seat belt retractor according to claim 1 or 2, further comprising a stopper for stopping the relative rotation of the spindle in the payout direction, the stopper being provided so as to not rotate relative to the spindle while being displaceable in the separation direction relative to the spindle, and after activation of the pretensioner is stopped, the stopper displaces in the separation direction relative to the spindle based on relative rotation of the spindle in the payout direction, and displacement is restricted by the lock ring, thereby stopping the relative rotation of the spindle in the payout direction.

9. The seatbelt retractor according to claim 3, wherein during the first period, after the first bar is twisted by the load of the occupant that is transmitted in order from the spindle and the sleeve, the sleeve separates from the spindle such that the first bar is no longer twisted, while the load is not applied to the second bar due to the spindle and the sleeve being engaged, and during the second period, the first bar and the second bar are connected in series and of the first bar and the second bar, only the second bar is twisted due to load of the occupant.

10. The seatbelt retractor according to claim 2, wherein the first bar includes a first head side end part secured to the tread head and a first sleeve side end part engaged with the inner peripheral surface of the sleeve and the second bar includes a second spindle side end part secured to the spindle and a second sleeve side end part attached to the first sleeve side end part or engaged with the inner peripheral surface of the sleeve.

11. The seatbelt retractor according to claim 2, wherein the torsional rigidity of the first bar is greater than the torsional rigidity of the second bar.

12. The seatbelt retractor according to claim 1, further comprising an energy absorbing member secured to the spindle and that absorbs energy from the relative rotation of the spindle after activation of the pretensioner is stopped, wherein the lock ring includes an interference part that interferes with the energy absorbing member.

13. The seatbelt retractor according to claim 12, wherein during relative rotation of the spindle after activation of the pretensioner is stopped, the interference part of the lock ring is configured so that an interference state of the energy absorbing member is generated based on change in rotation angle of the spindle and then the interference state is released.

14. The seatbelt retractor according to claim 1, further comprising:
a frame; and
a locking mechanism that stops rotation of the lock ring after activation of the pretensioner is stopped, wherein
the locking mechanism is provided on a first of the frame and the lock ring and includes a displaceable pawl configured in a non-engaging position that does not engage with an engaging position for engaging with a second of the frame and the lock ring, and
the pawl is in the non-engaging position during activation of the pretensioner and permits rotation of the lock ring but moves to the engaging position after activation of the pretensioner is stopped; thereby causing rotation of the lock ring to stop.
